# EUROPÄISCHE PATENTSCHRIFT

(11) **EP 3 526 113 B1**
(45) Veröffentlichungstag und Bekanntmachung des Hinweises auf die Patenterteilung: **21.06.2023**
(21) Anmeldenummer: 18829849.1
(22) Anmeldetag: 20.12.2018
(51) Int. Cl.: B63B 32/10

(54) **SURFBOARD MIT TRÄGER FÜR BAUTEILE EINES JETANTRIEBS**
SURFBOARD WITH A BASE PANEL FOR COMPONENTS OF A JET DRIVE
PLANCHE AVEC SUPPORT POUR DES COMPOSANTS D'UNE PROPULSION A JET

(30) Priorität: 21.12.2017 DE 102017130966
(43) Veröffentlichungstag der Anmeldung: 21.08.2019
(73) Patentinhaber: WBV Weisenburger Bau+Verwaltung GmbH, 76131 Karlsruhe (DE)
(72) Erfinder: WEISENBURGER, Nicolai, 76131 Karlsruhe (DE)
(74) Vertreter: Groth, Wieland
(86) Internationale Anmeldenummer: PCT/EP2018/086361
(87) Internationale Veröffentlichungsnummer: WO 2019/122225

(56) Entgegenhaltungen:
- CN-A- 107 933 845
- CN-U- 205 675 195
- CN-U- 205 738 032
- JP-A- 2002 193 185

## Beschreibung

Die Erfindung betrifft ein Surfboard mit einem Rumpf und mit einem im Rumpf angeordneten Jetantrieb.

Surfboards mit elektrischem Antrieb sind beispielsweise aus der DE 20 2011 051 071 bekannt. Vorteilhafterweise sind die angetriebenen Surfboards nicht auf hohen Wellengang angewiesen, sondern sie können auch in windstillen und brandungsarmen Gewässern benutzt werden. Gegenüber herkömmlichen Surfboards ohne elektrischen Antrieb sind die angetriebenen Surfboards natürlich deutlich wartungsintensiver, und es hat sich gezeigt, dass einzelne Bauteile von Zeit zu Zeit auch ausfallen können. Es hat sich als nachteilig erwiesen, dass das gesamte Surfboard zur Reparatur verschickt werden muss oder die einzelnen Bauteile mühsam ausgebaut werden müssen.

In der DE 10 2015 103 503 A1 ist ein aufblasbares Surfboard mit einer heckseitigen Aussparung für ein Antriebsbauteil offenbart. Das Antriebsbauteil umfasst einen elektrischen Antrieb. Nachteiligerweise ist der Antrieb gekapselt in dem Antriebsbauteil enthalten und er ist daher nur schwer zugänglich. Entsprechendes gilt auch für das Surfboard der DE 20 2015 009 474 U1.

In der US 2015/0086337 A1 ist ein Surfboard mit einem ebenfalls gekapselten Antrieb offenbart. Darüber hinaus sind die Akkus bzw. Batterien nachteiligerweise Bestandteil des herausnehmbaren Antriebs.

In der JP 2002-193185 ist ein Surfboard offenbart, das mit einem Verbrennungsmotor angetrieben wird. Es weist einen festen, nicht aufblasbaren Rumpf auf. Das Surfboard ist nachteiligerweise sehr schwer und schlecht verstaubar.

In der CN 205738032 U ist ein ebenfalls festes Surfboard offenbart, mit einem elektrischen Antrieb, der sich über den gesamten Rumpf erstreckt. Auch dieses Surfboard ist nachteiligerweise schwer verstaubar.

In der CN 205675195 U ist ein Surfboard beschrieben, dass einen umlaufenden aufblasbaren U-förmigen Wulst aufweist sowie eine kompakte und gekapselte Antriebseinheit, die als Ganzes aus dem Heckbereich des Surfboards herausnehmbar ist. Die einzelnen Bauteile des Antriebs sind jedoch bei Reparatur nachteiligerweise schwer zugänglich.

Die Aufgabe der Erfindung ist es daher, ein Surfboard mit einem Antrieb zur Verfügung zu stellen, der leicht repariert werden kann.

Die Aufgabe wird durch ein eingangs genanntes Surfboard mit den Merkmalen des Anspruchs 1 gelöst.

Vorteilhafte Ausbildungsformen sind Gegenstand der Unteransprüche.

Die Erfindung macht von der Idee Gebrauch, zumindest einige, vorzugsweise bei einem Antrieb durch einen Benzinmotor alle und bei einem Antrieb durch einen Elektromotor bis auf einen Akkumulator alle erforderlichen Bauteile, insbesondere den Motor selbst, insbesondere eine Steuerung, insbesondere einen Umrichter, einen Rotor sowie insbesondere ein Jetrohr auf einem Träger zu montieren. Unter einem Rotor kann ein Propeller, Impeller o.ä. verstanden werden.

Unter einem Träger wird hierbei eine Montageeinrichtung verstanden, die bereichsweise entlang einer Bodenplatte eben ausgebildet sein kann. Auf dem Träger sind die Bauteile an vorgesehenen Positionen befestigt. Die Befestigungsvorrichtungen sind günstigerweise lösbar, beispielsweise in Form von Schrauben, Schnellverschlüssen o. Ä.

Der Träger ist mit den Bauteilen zumindest weitgehend, vorzugsweise vollständig formschlüssig in eine im Rumpf des Surfboards vorgesehene Aussparung einfügbar. Dabei ist der Träger derart in die Aussparung einfügbar, dass eine Außenhaut des Surfboards vorzugsweise vollflächig glatt ausgebildet ist. Entlang der Außenhaut entsteht eine formschlüssige Verbindung zwischen Träger und Surfboard.

Die Verbindungslinie zwischen Träger und Surfboard ist vorzugsweise wasserdicht. Dadurch sind die Bauteile vor Wasserkontakt geschützt.

Die einzelnen Bauteile, insbesondere der Elektromotor, der Umrichter und die Steuerung sind günstigerweise wasserdicht verkapselt. Dabei sind die einzelnen Bauteile vorzugsweise den Klassen Pl 67, 68 oder 69 zugeordnet. Durch die separate und individuelle Verkapselung der Bauteile kann Wasser in den Träger eindringen, und der Antrieb bleibt vorteilhafterweise dennoch funktionsfähig.

Auch die elektrischen Verbindungen zwischen den Bauteilen sind dazu vorzugsweise den gleichen Dichtigkeitsklassen zugeordnet.

Die Erfindung macht von der Idee Gebrauch, bei einem Defekt des Antriebs den gesamten Träger mit den auf ihm angeordneten Bauteilen herauszunehmen. Erfindungsgemäß ist der Jetantrieb nach dem Herausnehmen des Trägers aus dem Rumpf frei zugänglich auf dem Träger angeordnet.

Zum einen sind die Bauteile dadurch deutlich leichter zugänglich und können repariert werden, und zum anderen ist es möglich, offensichtlich defekte Bauteile herauszunehmen und separat zu reparieren oder auszutauschen. Es ist auch möglich, den gesamten Träger einzuschicken und seine Bauteile zu reparieren.

Vorzugsweise weist der Träger eine Bodenplatte auf, auf der der Jetantrieb montiert ist. Der Träger besteht günstigerweise nur aus der Bodenplatte und ggf. noch einer heckseitigen Wandung. Der Träger ist nach oben hin offen. Auf der inneren Seite der Bodenplatte sind die Bauteile des Antriebs montiert. Der Antrieb ist aber nicht durch eine mit dem Träger verbundene aus dem Rumpf herausnehmbare Abdeckung abgedeckt. Der Antrieb liegt frei auf dem Träger und wird frei liegend in eine Aussparung auf einer Rumpfunterseite eingefügt.

Die Träger sind vorzugsweise für verschiedene Surfboards, auch verschiedene Surfboardtypen, formgleich ausgebildet, so dass die Träger zwischen den Surfboards getauscht werden können.

Der Träger weist vorzugsweise eine Bodenplatte auf mit einer Öffnung für einen Wassereinlass und eine vom heckseitigen Plattenrand abstehende Stirnseite mit einer Öffnung für den Wasserauslass. Die Stirnseite und die Bodenplatte können beispielsweise über seitliche Winkel miteinander verstärkend verbunden sein. Der Träger kann aus einem Kunststoffmaterial bestehen, er kann beispielsweise ein einteiliges Spritzgussbauteil sein.

Die Bauteile sind günstigerweise auf dem Träger über herkömmliche Schrauben, Nylonschrauben oder andere Schrauben festgeschraubt. Es können aber auch Spannverschlüsse, Steckverschlüsse oder andere Befestigungsmechanismen vorgesehen sein.

In einer günstigen Ausführungsform der Erfindung ist ein Einlass des Jetrohrs mit dem Wassereinlass und ein Auslass des Jetrohrs mit dem Wasserauslass verbunden. Das Jetrohr ist in einer Länge so ausgebildet, dass es genau zwischen die beiden Öffnungen in der Bodenplatte und der Stirnseite hineinpasst und die wasserleitende Verbindung zwischen Wassereinlass und Wasserauslass herstellt. In dem Jetrohr ist ein Rotor angeordnet, der für den eigentlichen Vortrieb des Surfboards sorgt.

Bei dem erfindungsgemäßen Surfboard sind grundsätzlich zwei Ausführungsformen des Rumpfes denkbar. Der Rumpf kann als dauerhaft festes Bauteil ausgebildet sein. Dabei ist ein schaumhaltiger Kern vorgesehen, der beispielsweise mit einem Laminat überzogen ist. Der Rumpf weist dann eine Aussparung im heckseitigen Ende auf, in die der Träger eingepasst werden kann. Der Träger kann über Befestigungsmittel befestigt werden. Er kann auch eingeschoben werden oder von oben von der Trittfläche aus über Befestigungsmittel wie Schrauben am Rumpf befestigt werden.

In einer anderen Ausführungsform des Surfboards ist der Rumpf als aufblasbares Rumpfbauteil ausgebildet, das seitliche Arme aufweist, die eine etwa U-förmige Aussparung ausbilden, in die eine Antriebseinheit einsetzbar ist. Die Antriebseinheit weist den erfindungsgemäßen Träger mit den darauf montierten Bauteilen auf, sowie die weiteren erforderlichen Bauteile, insbesondere den Akkumulator. Der Träger weist in beiden Ausführungsformen der Erfindung jedoch vorzugsweise nicht den Akkumulator auf, der separat, beabstandet vom Träger, im Surfbrett angeordnet ist. Der Akkumulator muss entgegen dem Träger häufiger ausgewechselt werden, beispielsweise wenn man sich zeitaufwendige Ladevorgänge sparen will und einfach einen leeren Akkumulator durch einen geladenen Akkumulator austauschen möchte. Dazu ist der Akkumulator über lösbare Steckverbindungen, wie beispielsweise einem Hochstromstecker, elektrisch mit der übrigen Antriebseinheit verbunden, und mit lösbarem Befestigungsmechanismus mechanisch in der Antriebseinheit befestigt.

Der Träger zeichnet sich erfindungsgemäß auch durch die Bodenplatte aus, auf der die Bauteile des Jetantriebs angeordnet sind, die von der der Bodenplatte gegenüberliegenden Seite frei zugänglich sind. Der Träger ist günstigerweise in eine Aussparung des Rumpfbauteils einschiebbar oder einsetzbar und idealerweise so dimensioniert, dass er mit dem Rumpfbauteil eine weitgehend formschlüssige Verbindung oder eine Klemmverbindung ausbildet.

Die Erfindung wird anhand eines Ausführungsbeispiels in vier Figuren beschrieben. Dabei zeigen:
- Fig. 1: ein erfindungsgemäßes Surfboard mit Träger in einer Durchsicht,
- Fig. 2: eine Untenansicht des Surfboards in Fig. 1,
- Fig. 3: eine perspektivische Ansicht eines erfindungsgemäßen Trägers mit Bauteilen,
- Fig. 4: eine Explosionsansicht des Trägers mit abgenommenen Bauteilen.

Grundsätzlich ist unter einem Surfboard 1 eine Vorrichtung zu verstehen, auf der ein Surfer steht, kniet oder sitzt und die auf Wasser aufschwimmt, und die vorteilhafterweise einen Auftrieb hat, der hinreichend ist, den Surfer zu tragen. Zumindest sollte der Auftrieb zusammen mit dem Vorschub, den ein Jetantrieb 2 dem Surfboard 1 verleiht, hinreichenden sein, damit das Surfboard 1 über das Wasser fährt.

Das Surfboard 1 weist in der Regel kein Segel auf. Damit der Surfer auf dem Surfboard 1 sein Gleichgewicht leichter halten kann, kann in einer Ausgestaltungsvariante eine Schnur vom bugseitigen Ende des Surfboards 1 abgehen, die günstigerweise mit einem Griff versehen ist, an der sich der Surfer zusätzlich festhalten kann.

Das Surfboard 1 weist an einem Heck 3 den Jetantrieb auf. Der Jetantrieb 2 umfasst eine Öffnung zum Wassereinlass 4 hin in einer Unterwasserfläche 6 des Surfboards 1 und ein Jetrohr 7 mit einem an einer Stirnseite 8 des Hecks 3 angeordneten Wasserauslass 9. Der Wasserauslass 9 ist in der Regel als Düse ausgebildet, die gegebenenfalls schwenkbar um eine vertikal zu einer Trittfläche 11 angeordneten Drehachse drehbar ist. In dem Jetrohr 7 ist ein (nicht dargestellter) Rotor angeordnet, der das in das Jetrohr 7 hineingesogene Wasser aus der Düse herausspritzt und dem Surfer mit dem Surfboard 1 dadurch einen Vortrieb verleiht. Ein Motor 12 ist entlang eines Antriebsstranges 13 hinter dem Rotor im Surfboard 1 angeordnet. Der Motor 12 treibt den Rotor an. Es ist eine Steuerung 14 für den Motor 12 vorgesehen, mit dem die Leistung des Motors 12 gesteuert werden kann; insbesondere kann damit die Geschwindigkeit des Surfboards 1 gesteuert werden. Die Steuerung 14 kann beispielsweise über eine Funkfernbedienung, die der Surfer in der Hand hält, steuerbar sein. Sowohl der Motor 12 als auch die Steuerung 14 sind über einen (nicht dargestellten) Akkumulator mit Strom versorgt. Ein Umrichter 16 richtet den vom Akkumulator zur Verfügung gestellten Gleichstrom in Wechselstrom um. Der Motor 12 ist dazu als Elektromotor ausgebildet.

Das erfindungsgemäße Surfboard 1 weist einen Träger 17 auf, auf dem das Jetrohr 7, der Motor 12 mit dem Antriebsstrang 13 und dem Propeller, der im Jetrohr 7 drehbar angeordnet ist, sowie die Steuerung 14 und der Umrichter 16 vorgesehen sind. Unter Steuerung 14 wird hier allgemein die Elektronik auf einem Mainboard verstanden, die unter anderem die Leistung des Motors 12 regelt, aber beispielsweise auch möglicherweise die Stellung der Düse mit Steuersignalen beaufschlagt.

Der Träger 17 mit den Bauteilen des Jetantriebs 2 ist an einem heckseitigen Ende in einer Aussparung 20 des Surfboards 1 eingelassen. Das Surfboard 1 ist hier mit einem dauerhaft festen Rumpf 22 aus einem Kunststoffüberzug und mit einem Schaumkern ausgebildet. Der Kunststoffüberzug kann ein vollflächiger Laminatüberzug sein. Das Surfboard 1 weist die Aussparung 20 auf einer Unterwasserfläche 6 auf, in die der Träger 17 formschlüssig hineinpasst, so dass sich eine über die gesamte Unterwasserfläche 6 ebene Fläche ausbildet, die keine oder nur eine kaum wahrnehmbare, etwa U-förmig umlaufende Rille 21 zwischen dem Rumpf 11 und der Bodenplatte 40 des Jetträgers 17 ausbildet.

Die Trittfläche 11 ist vollständig und durchgehend über eine Boardoberseite ausgebildet. Die Aussparung 20 ist lediglich an der Wasserunterfläche 6 und an der Stirnseite 8 des Hecks 3 des Surfboards 1 ausgebildet.

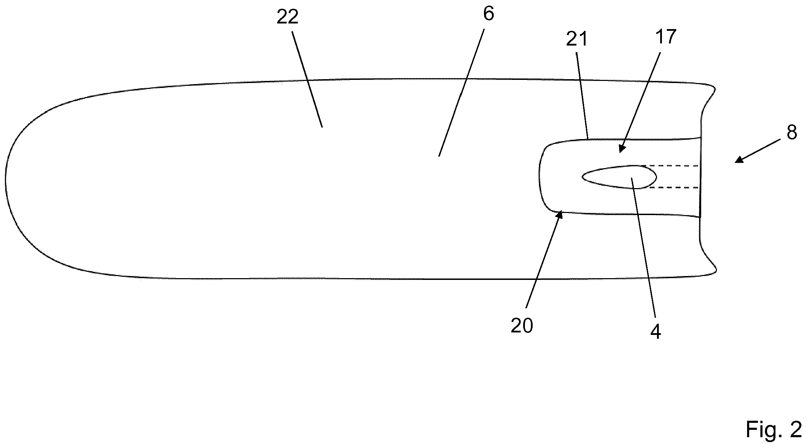

Fig. 2 zeigt das Surfboard 1 in einer Untenansicht, die die U-förmige Aussparung 20 im Rumpf 22 des Surfboards 1 darstellt, in die der Träger 17 mit dem Wassereinlass 4 eingesteckt ist. Die Unterwasserfläche 6 ist nach dem Einbringen des Trägers 17 mit der Bodenplatte 40 eben ausgebildet. Ebenso ist die Stirnseite 8 des Hecks 3 des Surfboards 1 eben ausgebildet.

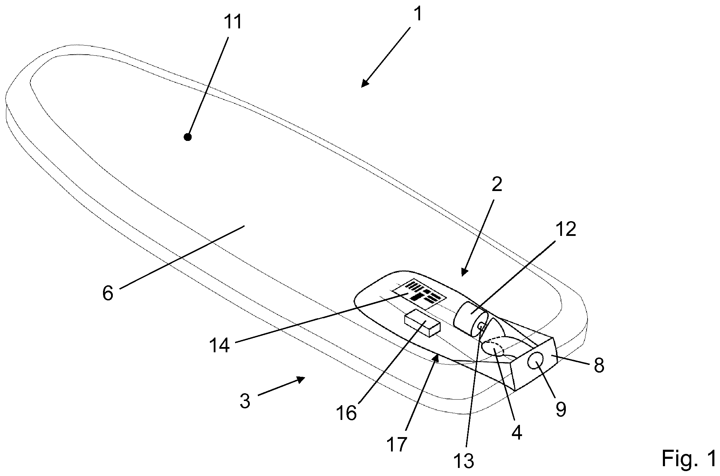

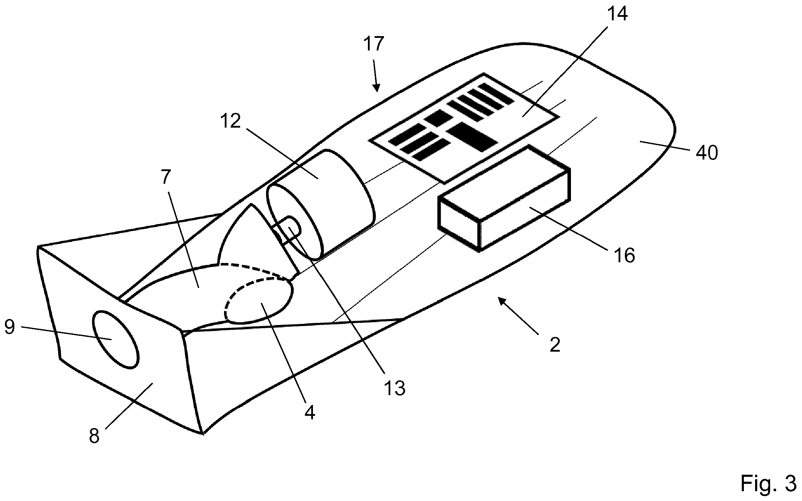

Fig. 3 zeigt den Träger 17 mit der Bodenplatte 40 und der Stirnseite 8 des Hecks, wobei die Bodenplatte 40 die Öffnung für den Wassereinlass 4 aufweist und die Stirnseite 8 des Hecks 3 die Öffnung für den Wasserauslass 9 aufweist. Gleiche Bezugszeichen bezeichnen gleiche Bauteile wie in Fig. 1. Das Jetrohr 7 ist so dimensioniert, dass es genau zwischen den Wassereinlass 4 und den Wasserauslass 9 hineinpasst und eine wasserleitende Verbindung zwischen dem Wassereinlass 4 und dem Wasserauslass 9 ausbildet.

In dem Jetrohr 7 ist, hier nicht dargestellt, ein Rotor vorgesehen, der das in das Jetrohr 7 eintretende Wasser ansaugt und beschleunigt und nach hinten herausspritzt, um dem Surfboard 1 Vortrieb zu verleihen. Der Rotor ist über einen Antriebsstrang 13 mit dem Motor 12 verbunden, der wiederum über einen nicht dargestellten Akkumulator mit Strom versorgt wird. Die Steuerung 14, die auf einem Mainboard angeordnet ist, ist schematisch dargestellt.

Die Bauteile sind einzeln wasserdicht verkapselt, soweit dieses für ihr Funktionieren erforderlich ist; insbesondere sind der Motor 12 sowie der Umrichter 16 und die Steuerung 14 wasserdicht verkapselt.

Der Träger 17 kann aus der Aussparung 20 nach Öffnen von Befestigungsmitteln wie Spannschrauben o. Ä. herausgenommen werden. Beim Herausnehmen verbleiben zumindest das Jetrohr 7, der Motor 12, der Umrichter 16 und die Steuerung 14 auf der Bodenplatte 40 des Trägers 17 und werden mit ihr herausgenommen. Bei Bedarf können die einzelnen Bauteile repariert oder ersetzt werden, oder der gesamte Träger 17 inklusive aller Bauteile kann durch einen neuen Träger 17 inklusive neuer Bauteile ersetzt werden. Die Anschlüsse zum Akkumulator werden beim Herausnehmen des Trägers 17 getrennt, der Akkumulator ist nicht mit dem Träger 17 verbunden.

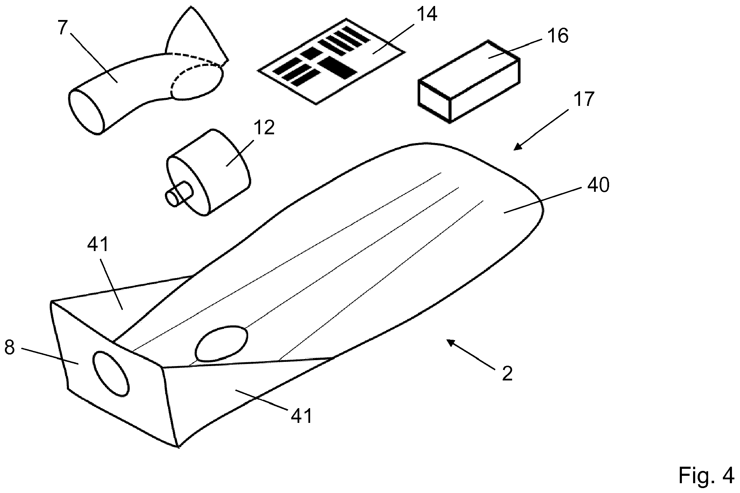

Fig. 4 zeigt den Jetantrieb 2 in einem schematisch demontierten Zustand. Der Träger 17 weist die Bodenplatte 40 auf sowie die Stirnseite 8 des Hecks 3. Die Stirnseite 8 des Hecks 3 ist an einem heckseitigen Rand der Bodenplatte 40 angeordnet und beispielsweise über Seitenwände oder Verstärkungswinkel 41 mit der Bodenplatte 40 verbunden.

### Bezugszeichenliste

- 1: Surfboard
- 2: Jetantrieb
- 3: Heck
- 4: Wassereinlass

- 6: Unterwasserfläche
- 7: Jetrohr
- 8: Stirnseite
- 9: Wasserauslass

- 11: Trittfläche
- 12: Motor
- 13: Antriebsstrang
- 14: Steuerung

- 16: Umrichter
- 17: Träger

- 20: Aussparung
- 21: Rille
- 22: Rumpf

- 40: Bodenplatte
- 41: Verstärkungswinkel

## Patentansprüche

1. Surfboard mit einem Rumpf (22) und einem im Rumpf (22) angeordneten Jetantrieb (2), wobei
der Jetantrieb (2) auf einem Träger (17) montiert ist und der Träger (17) am Rumpf (22) mit Befestigungsmitteln lösbar befestigbar ist und nach dem Lösen der Befestigungsmittel zusammen mit dem Jetantrieb (2) aus dem Rumpf (22) herausnehmbar ist und ein Akkumulator für den Jetantrieb (2) im Rumpf (22) angeordnet ist und der Akkumulator separiert vom Träger (17) im Surfboard (1) angeordnet ist und nicht zusammen mit dem Träger (17) herausnehmbar ist, **dadurch gekennzeichnet, dass** ein Jetrohr (7), ein Rotor, ein Motor (12), eine Steuerung (14) und ein Umrichter (16) auf dem Träger (17) angeordnet sind.

2. Surfboard nach Anspruch 1,
**dadurch gekennzeichnet, dass** der Träger (17) eine Bodenplatte aufweist, auf der der Jetantrieb (2) montiert ist.

3. Surfboard nach Anspruch 1 oder 2,
**dadurch gekennzeichnet, dass** der Rumpf (22) eine Aussparung (20) aufweist und der Träger (17) in die Aussparung (20) eingefügt ist und mit einer Außenhaut des Surfboards (1) eine ebene Fläche ausbildet.

4. Surfboard nach einem der Ansprüche 1 bis 3,
**dadurch gekennzeichnet, dass** der Träger (17) eine ebene Bodenplatte (40) aufweist mit einer Öffnung für einen Wassereinlass (4) und eine vom heckseitigen Bodenplattenrand abstehende Stirnseite (8) aufweist mit einer Öffnung für einen Wasserauslass (9).

5. Surfboard nach einem der Ansprüche 1 bis 4,
**dadurch gekennzeichnet, dass** ein Einlass des Jetrohres (7) mit dem Wassereinlass (4) und ein Auslass des Jetrohres (7) mit dem Wasserauslass (9) verbunden ist.

6. Surfboard nach einem der vorstehenden Ansprüche,
**dadurch gekennzeichnet, dass** der Träger (17) mit montierten Bauteilen in die Aussparung (20) in dem Rumpf (22) des Surfboards (1) eingelassen ist und eine Unterseite des Trägers (17) mit einer Unterwasserfläche (6) des Rumpfes (22) eine ebene Fläche ausbildet.

7. Surfboard nach einem der vorstehenden Ansprüche,
**dadurch gekennzeichnet, dass** der Rumpf (22) ein aufblasbares Rumpfbauteil aufweist.

8. Surfboard nach einem der vorstehenden Ansprüche,
**dadurch gekennzeichnet, dass** der Träger (17) mit montierten Aufbauten Teil einer Antriebseinheit ist, die in die heckseitige Aussparung (20) eines Rumpfbauteils einsetzbar ist.

## Claims

1. Surfboard having a hull (22) and a jet drive (2) arranged in the hull (22),
whereby
the jet drive (2) is mounted on a carrier (17) and the carrier (17) can be releasably fastened to the hull (22) by fastening means and can be removed from the hull (22) together with the jet drive (2) after the release of the fastening means and a battery for the jet drive (2) is arranged in the hull (22) and the battery is arranged separately from the carrier (17) in the surfboard (1) and is not removable together with the carrier (17), **characterised in that** a jet tube (7), a rotor, a motor (12), a controller (14) and a converter (16) are mounted on the carrier (17).

2. Surfboard according to claim 1,
**characterised in that** the carrier (17) has a base panel on which the jet drive (2) is mounted.

3. Surfboard according to claim 1 or 2,
**characterised in that** the hull (22) has a recess (20) and the carrier (17) is inserted into the recess (20) and forms a planar surface with an outer skin of the surfboard (1).

4. Surfboard according to one of claims 1 to 3,
**characterised in that** the carrier (17) has a planar base panel (40) with an opening for a water inlet (4) and an end face (8) projecting from the edge of the base panel at the stern end with an opening for a water outlet (9).

5. Surfboard according to one of claims 1 to 4,
**characterised in that** an inlet of the jet tube (7) is connected to the water inlet (4) and an outlet of the jet tube (7) is connected to the water outlet (9).

6. Surfboard according to one of the preceding claims,
**characterised in that** the carrier (17) with components mounted thereon is set into the recess (20) in the hull (22) of the surfboard (1), and an underside of the carrier (17) forms a planar surface with an underwater surface (6) of the hull (22).

7. Surfboard according to one of the preceding claims,
**characterised in that** the hull (22) has an inflatable hull component.

8. Surfboard according to one of the preceding claims,
**characterised in that** the carrier (17) with components mounted thereon is part of a drive unit which can be inserted into the recess (20) at the stern end of a hull component.

## Revendications

1. Planche de surf avec une coque (22) et une propulsion à jet (2) placée dans la coque (22), cependant que la propulsion à jet (2) est montée sur un support (17) et le support (17) peut être fixé de manière amovible sur la coque (22) avec des moyens de fixation et peut être enlevé de la coque (22) après avoir desserré les moyens de fixations avec la propulsion à jet (2) et un accumulateur pour la propulsion à jet (2) est placée dans la coque (22) et l'accumulateur est placé de manière séparée du support (17) dans la planche de surf (1) et ne peut pas être enlevé avec le support (17), **caractérisée en ce qu'**un tuyau de jet (7), un rotor, un moteur (12), une commande (14) et un convertisseur (16) sont placés sur le support (17).

2. Planche de surf selon la revendication 1, **caractérisée en ce que** le support (17) présente une plaque de fond sur laquelle la propulsion à jet (2) est montée.

3. Planche de surf selon la revendication 1 ou 2, **caractérisée en ce que** la coque (20) présente un évidement (20) et le support est inséré dans l'évidement (20) et forme une surface plane avec une enveloppe extérieure de la planche de surf (1).

4. Planche de surf selon l'une des revendications 1 à 3, **caractérisée en ce que** le support (17) présente une plaque de fond plane (40) avec une ouverture pour une entrée d'eau et un côté frontal (8), faisant saillie du bord de la plaque de fond côté arrière, avec un orifice pour une sortie de l'eau (9).

5. Planche de surf selon l'une des revendications 1 à 4, **caractérisée en ce qu'**une entrée du tuyau de jet (7) est reliée à l'entrée d'eau (4) et une sortie du tuyau de jet (8) à la sortie de l'eau (9).

6. Planche de surf selon l'une des revendications précédentes, **caractérisée en ce que** le support (17) est encastré avec des composants montés dans l'évidement (20) dans la coque (22) de la planche de surf (1) et une face inférieure du support (17) forme une surface plane avec une surface immergée (6) de la coque (22).

7. Planche de surf selon l'une des revendications précédentes, **caractérisée en ce que** la coque (22) présente un composant de coque gonflable.

8. Planche de surf selon l'une des revendications précédentes, **caractérisée en ce que** le support (17) avec des superstructures montées est une partie d'une unité de propulsion qui peut être insérée dans l'évidement côté arrière (20) d'un composant de coque.
